# EUROPEAN PATENT APPLICATION

(11) **EP 4 503 395 A1**
(43) Date of publication of application: **05.02.2025**
(21) Application number: 23780318.4
(22) Date of filing: 27.03.2023
(51) Int. Cl.: H02K 3/50

(54) **ROTATING ELECTRIC MACHINE, VEHICLE, AND BUS RING**

(30) Priority: 30.03.2022 JP 2022056945
(71) Applicant: HONDA MOTOR CO., LTD., Minato-ku Tokyo 107-8556 (JP)
(72) Inventor: SHIRASUNA, Takamori, Wako-shi, Saitama 351-0193 (JP); TAKAGI, Ryota, Wako-shi, Saitama 351-0193 (JP); KUBOTA, Ryo, Wako-shi, Saitama 351-0193 (JP)
(74) Representative: Dehns
(86) International application number: PCT/JP2023/012146
(87) International publication number: WO 2023/190308

(57) **Abstract**

A rotating electric machine comprises: a rotor; an annular stator including a plurality of stator core blocks arranged to surround a magnet of the rotor; a plurality of insulating members that respectively cover the plurality of stator core blocks; a plurality of coils wound around the plurality of stator core blocks via the plurality of insulating members, respectively; and a bus ring engaged with the plurality of insulating members; wherein the bus ring includes: an inner ring provided with a terminal portion to which each conductive wire of the plurality of coils is connected; an outer ring disposed on an outward side in a radial direction of the inner ring and engaged with the plurality of insulating members; and a bridge portion that connects the inner ring and the outer ring and forms a radial gap between the inner ring and the outer ring.

## Description

### TECHNICAL FIELD

The present invention relates to a rotating electric machine, a vehicle, and a bus ring that collect and distribute power with respect to windings wound around a plurality of stator cores.

### BACKGROUND ART

Conventionally, for example, a bus ring that collects and distributes motor current (collects and distributes current) to a winding of a stator in a three-phase AC motor is known (see PTL 1).

### CITATION LIST

### PATENT LITERATURE

PTL 1: Japanese Patent Laid-Open No. 2014-124009

### SUMMARY OF INVENTION

### TECHNICAL PROBLEM

Here, in the technique disclosed in PTL 1, the bus ring is positioned by being abutted on an insulating member provided on the stator, and a terminal is provided on a circumferential portion of the bus ring. Therefore, when electric motors having different motor diameters are designed and the distance from the rotating shaft of the rotor to the stator changes, the shape of a bus line to the terminal also needs to be changed. Therefore, there is a problem that high design costs are incurred when designing rotating electric machines having different motor diameters, such as different distances from a rotation shaft of a rotor to a stator core.

The present invention has been made in view of the above problems, and an object thereof is to provide a technique capable of reducing the design cost of a bus ring in the case of designing rotating electric machines having different motor diameters.

### SOLUTION TO PROBLEM

According to the present invention, a rotating electric machine is characterized by comprising:
a rotor;
an annular stator including a plurality of stator core blocks arranged to surround a magnet of the rotor;
a plurality of insulating members that respectively cover the plurality of stator core blocks;
a plurality of coils wound around the plurality of stator core blocks via the plurality of insulating members, respectively; and
a bus ring engaged with the plurality of insulating members;
wherein the bus ring includes:
   an inner ring provided with a terminal portion to which each conductive wire of the plurality of coils is connected;
   an outer ring disposed on an outward side in a radial direction of the inner ring and engaged with the plurality of insulating members; and
   a bridge portion that connects the inner ring and the outer ring and forms a radial gap between the inner ring and the outer ring.

### ADVANTAGEOUS EFFECTS OF INVENTION

According to the present invention, it is possible to provide a technique capable of reducing the design cost of a bus ring in the case of designing rotating electric machines having different motor diameters.

### BRIEF DESCRIPTION OF DRAWINGS

FIG. 1 is a diagram illustrating a structure of a rotating electric machine according to an embodiment.
FIG. 2 is a cross-sectional view of a rotating electric machine.
FIG. 3 is a view illustrating a structure of a stator core block and an insulating member.
FIG. 4 is a diagram illustrating a structure of a bus ring.
FIG. 5A is an enlarged view of a bus ring.
FIG. 5B is an enlarged view of the insulating member.
FIG. 6A is a view illustrating a step of assembling a bus ring and a stator.
FIG. 6B is a view illustrating a step of assembling the bus ring and the stator.
FIG. 6C is a view illustrating a step of assembling the bus ring and the stator.
FIG. 6D is a view illustrating a step of assembling the bus ring and the stator.
FIG. 7A is a view illustrating a manufacturing process of the bus ring.
FIG. 7B is a view illustrating a manufacturing process of the bus ring.
FIG. 8 is a diagram illustrating a structure of a modification of the rotating electric machine.

### DESCRIPTION OF EMBODIMENTS

Hereinafter, embodiments of the present invention will be described with reference to the drawings.

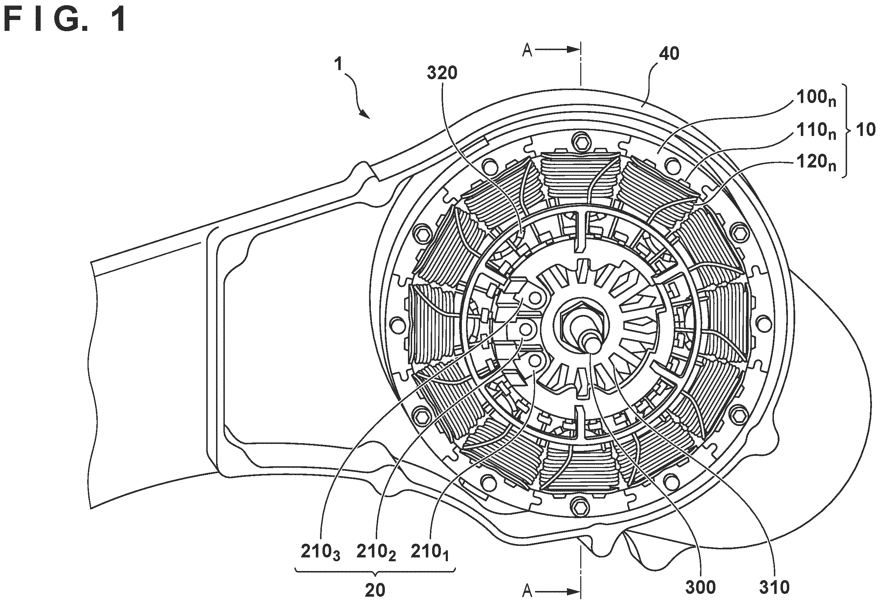

FIG. 1 illustrates a cross-sectional structure of a rotating electric machine according to the present embodiment. The rotating electric machine 1 of FIG. 1 includes a stator 10, a bus ring 20, a rotor 30, and a bracket 40. The rotating electric machine 1 is a vehicle generator mounted on a vehicle such as a motorcycle.

The stator 10 includes stator core blocks 100₁ to 100ₙ (n is an integer, and n=12 in the present embodiment), insulating members 110₁ to 110ₙ, and coils 120₁ to 120ₙ. Hereinafter, the stator core blocks 100₁ to 100ₙ, the insulating members 110₁ to 110ₙ, and the coils 120₁ to 120ₙ may be referred to as a stator core block 100, an insulating member 110, and a coil 120 without distinction. One set of the stator core block 100, the insulating member 110, and the coil 120 is also called a tooth, and a plurality of teeth are combined to form an annular stator 10. The insulating member 110 covers the stator core block 100 and is formed of a material such as resin that electrically insulates the stator core block 100 from the coil 120. The coil 120 is formed of a conductive wire wound around the insulating member 110. Both ends of the conductive wire of the coil 120 are wired to the bus ring 20 side.

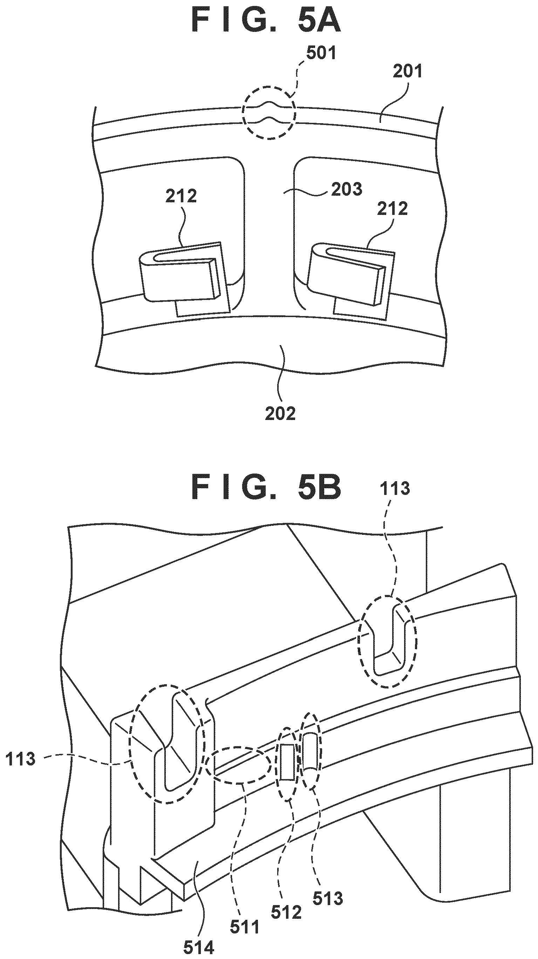

The bus ring 20 includes an insulating ring 200 and buses 210₁ to 210₄. Hereinafter, the buses 210₁ to 210₄ may be referred to as a bus 210 without distinction. The insulating ring 200 is a member for fixing the bus 210 for supplying power to the coil 120 while electrically insulating the bus from the rotor 30 and the stator core block 100. The bus ring 20 is positioned by being abutted against the stator 10, as described below with reference to FIGS. 5A and 5B.

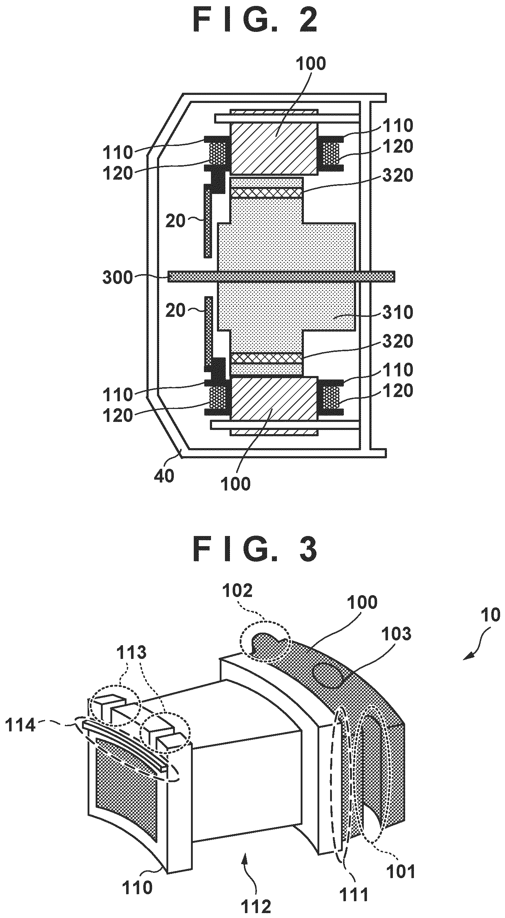

The rotor 30 includes a shaft 300, a plate 310, and magnets 320₁ to 320ₘ (m is an integer, and m=8 in the present embodiment). Hereinafter, the magnets 320₁ to 320ₘ may be referred to as a magnet 320 without distinction. As illustrated in FIG. 2, the rotor 30 is disposed such that the magnet 320 is surrounded by the stator 10. The magnetic field generated by supplying power to the coil 120 and the magnetic field formed by the magnet 320 interact with each other, and the plate 310 on which the magnet 320 is disposed can be rotated.

The stator 10, the bus ring 20, and the rotor 30 are housed in the bracket 40. The stator 10 is fixed to the bracket 40, and the bus ring is fixed to the stator 10. As a result, the rotor 30 rotates about the shaft 300 as a rotation shaft.

The stator 10, the bus ring 20, and the rotor 30 have an annular shape or a disc shape as illustrated in FIG. 1, and have a shared axial direction, circumferential direction, and radial direction.

FIG. 2 is a cross-sectional view of the rotating electric machine 1 in a plane parallel to the axis of the rotor 30 taken along a dotted line A-A' in FIG. 1.

The stator 10 is disposed so as to surround the magnet 320 installed on the rotor 30. A bus ring 20 is disposed axially above the plate 310 of the rotor 30. The magnet 320 is sandwiched between the stator core blocks 100 of the stator 10 and rotates the shaft 300 via the plate 310. The shaft 300 of the rotor 30 extends to the outside of the bracket 40 and is connected to a drive unit of the vehicle.

FIG. 3 is a view illustrating a structure of one set of the stator core block 100 and the insulating member 110. The stator core block 100 includes a concave portion 101 and a convex portion 102 for engaging with another adjacent stator core block 100. The stator core block 100 includes a mounting hole 103, and the stator 10 can be fixed to a generator cover by fixing the tip of the bolt passing through the mounting hole 103 to a bolt hole formed in an inner surface of the generator cover.

The concave portion 101 and the convex portion 102 are engagement structures for engaging with the convex portion 102 and the concave portion 101 of the adjacent stator core block 100, respectively, as shown in FIG. 1. The plurality of stator core blocks 100 can be positioned by fitting the convex portion 102 of the one stator core block 100 into the concave portion 101 of the other stator core block 100.

The insulating member 110 includes an abutting portion 111 that performs positioning with the stator core block 100, a core portion 112 for forming the coil 120 by winding a copper wire, a guide portion 113 that guides both ends of the coil to the bus ring 20 side, and an engagement portion 114 for engaging with the bus ring 20.

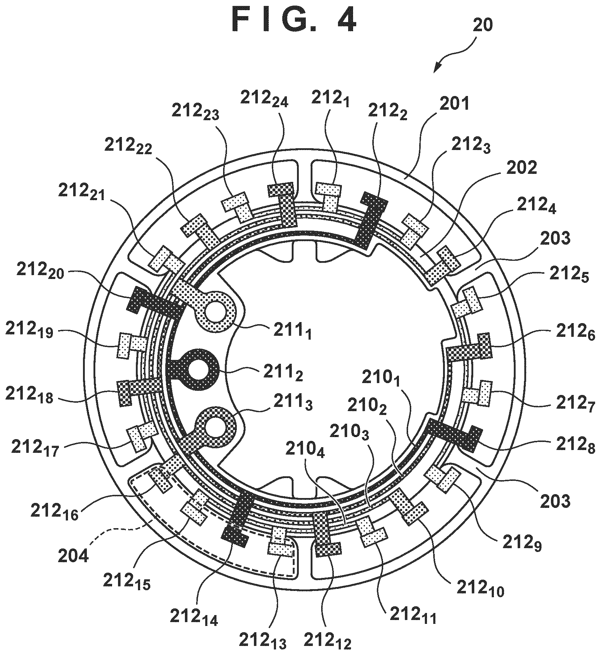

The abutting portion 111 is a structure for positioning the insulating member 110 and the stator core block 100 by being pressed until abutting on the T-shaped stator core block 100. The core portion 112 has a bobbin structure for preventing the conductive wire wound around the core portion 112 from moving toward the stator core block 100 and the bus ring 20. The guide portion 113 is a notch-shaped (concave shape) portion provided in the core portion 112, and has a structure for guiding both ends of the conductive wire of the coil 120 toward the bus ring 20. In one example, the guide portion 113 may have a hole shape provided on the bus ring 20 side of the core portion 112 instead of the notch shape. The engagement portion 114 has a structure for fixing the positions of the bus ring 20 and the stator 10. The shape of the engagement portion 114 will be described below with reference to FIG. 4(B).

FIG. 4 is a diagram illustrating a structure of the bus ring 20. The buses 210₁ to 210₄ include buses 210₁ to 210₃ connected to grommets 211₁ to 211₃ corresponding to the three-phase output of the generator and a bus 210₄ connecting the plurality of coils 120. In FIG. 4, four buses 210₄ are provided. In addition, the buses 210₁ to 210₄ are provided with a total of 2n terminals 212₁ to 212₂ₙ (2n=24 in the present embodiment). Hereinafter, the terminal 212₁ to 212₂ₙ may be referred to as a terminal 212 without distinction. A bolt for coupling an external output harness is connected to the grommets 211₁ to 211₃.

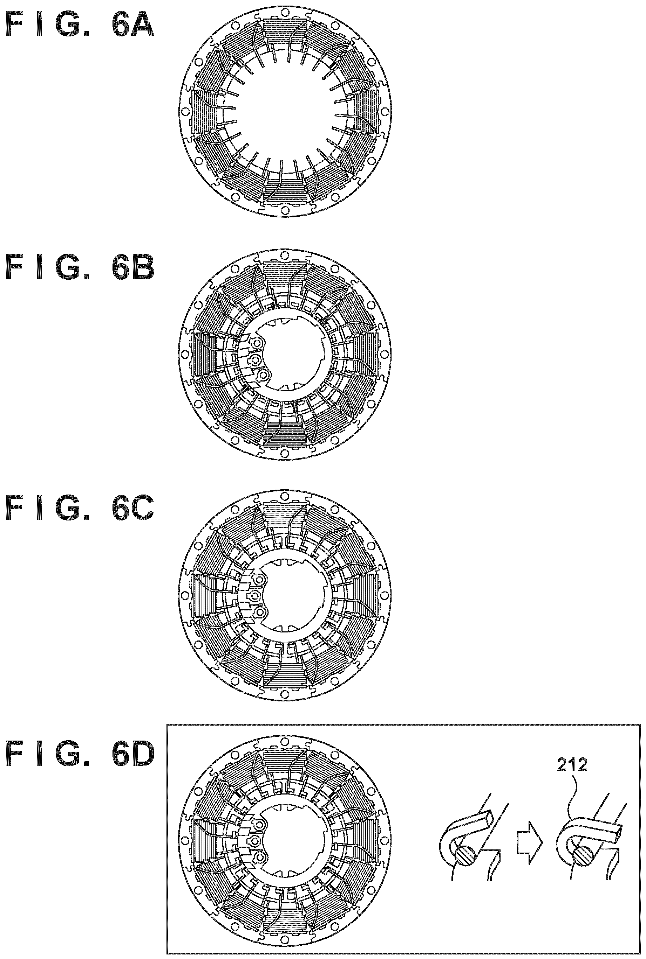

In the example of FIG. 4, the terminal 212₂ᵢ₋₁ (i=1 to n) is connected to the bus 210₄, the terminals 212₂, 212₈, 212₁₄, and 212₂₀ are connected to the bus 210₁, the terminals 212₆, 212₁₂, 212₁₈, and 212₂₄ are connected to the bus 210₂, and the terminals 212₄, 212₁₀, 212₁₆, and 212₂₂ are connected to the bus 210₃. The conductive wire from the coil 120 is fixed by being sandwiched between the terminals 212 on the bus ring 20 side and crimped as described below with reference to FIG. 6D.

The insulating ring 200 is made of resin and includes an outer ring 201, an inner ring 202, and a bridge 203. The outer ring 201 has an engagement structure, described below with reference to FIG. 5A, and is connected to the inner ring 202 by one or more bridges 203. In the example of FIG. 4, six bridges 203 are arranged at equal intervals in the circumferential direction of the bus ring 20. The outer ring 201 has a shape concentric with the inner ring 202, and the bridge 203 extends in the radial direction of the outer ring 201 and the inner ring 202. This may provide a gap 204 between the outer ring 201 and the inner ring 202. The terminal 212 is disposed in the gap 204 so as to overlap in the axial direction of the rotor 30. In other words, the terminal 212 is disposed so as to protrude radially outward from the inner ring 202. Further, the gap 204 and at least a part of the magnet 320 are arranged to overlap each other in the axial direction of the rotor 30. Accordingly, heat dissipation performance of the magnet 320 can be improved. In addition, the terminal 212 is disposed at a position not overlapping the magnet 320 in the axial direction of the bus ring 20. For example, the terminal 212 is disposed closer to the center of the inner ring 202 than the magnet 320 in the radial direction of the bus ring 20. Accordingly, it is possible to prevent the heat dissipation of the magnet 320 from being hindered by the terminal 212.

Positioning of the bus ring 20 and the stator 10 will be described with reference to FIGS. 5A and 5B.

FIG. 5A is an enlarged view of the bus ring 20. As shown in FIG. 5A, a protrusion portion (protrusion) 501 is disposed on the outer ring 201. In one example, the protrusion 501 is disposed at a position overlapping the bridge 203 in the circumferential direction. As a result, when the bus ring 20 and the stator 10 are positioned, the radial load applied to the outer ring 201 via the protrusion 501 can be supported by the bridge 203, and the bus ring 20 can be prevented from being damaged when the bus ring 20 and the stator 10 are positioned.

The bridge 203 is disposed at a position not overlapping with the terminal 212 in the axial direction of the bus ring 20. As a result, the thickness of the bus ring 20 in the axial direction can be reduced, the bus ring 20 can be thinned, and this can contribute to reduction in manufacturing cost and miniaturization of the rotating electric machine.

FIG. 5B is an enlarged view of the insulating member 110 of the stator 10. A first concave portion 511, a guide portion 512, a second concave portion 513, and a support portion 514 are provided on the bus ring 20 side of the insulating member 110. The first concave portion 511 is recessed more than the other portion in the radial direction, and the protrusion 501 of the bus ring 20 can be aligned with the first concave portion 511 to place the bus ring 20 on the support portion 514. That is, the distance from the center of the stator 10 to the first concave portion 511 in the radial direction is larger than the distance from the center of the bus ring 20 to the tip of the protrusion 501 in the radial direction, and the distance from the center of the stator 10 to the support portion 514 in the radial direction is smaller. Accordingly, by fitting the protrusion 501 of the bus ring 20 in the axial direction in alignment with the first concave portion 511 until abutting on the support portion 514, the stator 10 can move in the circumferential direction while restricting the movement of the bus ring 20 in the radial direction with respect to the stator 10.

Subsequently, the bus ring 20 in which the protrusion 501 is fitted in the axial direction in accordance with the first concave portion 511 of the stator 10 is rotated in the circumferential direction of the stator 10 such that the protrusion 501 moves toward the second concave portion 513. Accordingly, by moving the protrusion 501 to engage with the second concave portion 513 via the guide portion 512, it is possible to facilitate alignment between the stator 10 and the bus ring 20.

As illustrated in FIG. 5A, the terminal 212 is formed in a U-shape opening in the rotation direction of the bus ring 20 in the circumferential direction of the bus ring 20 so that the conductive wire extending through the guide portion 113 can be easily sandwiched when the stator 10 and the bus ring 20 are aligned. As a result, it is possible to reduce work of sandwiching both ends of the conductive wire of the coil 120 between the terminals 212. The first concave portion 511, the guide portion 512, and the second concave portion 513 are disposed at positions not overlapping with the guide portion 113 in the circumferential direction of the stator 10. As a result, in positioning of the bus ring 20 and the stator 10, it is possible to prevent the conductive wire passing through the guide portion 113 from abutting on the protrusion 501, and it is possible to improve positioning convenience.

FIGS. 6A to 6D are views illustrating a process of assembling the stator 10 and the bus ring 20.

First, 12 sets of stator cores in which the coil 120 is formed by winding a conductive wire around a set of the stator core block 100 and the insulating member 110 illustrated in FIG. 3 are manufactured. Subsequently, the concave portions 101 and the convex portions 102 of the 12 sets of stator cores are combined to form the stator 10 as illustrated in FIG. 5A.

Subsequently, as illustrated in FIG. 6B, the bus ring 20 is placed on the stator 10. As described with reference to FIGS. 5A and 5B, this is performed by fitting the protrusion 501 of the bus ring 20 into the first concave portion 511 of the stator 10 in the axial direction and abutting the protrusion 501 on the support portion 514.

Subsequently, as illustrated in FIG. 6C, the bus ring 20 is rotated in the circumferential direction of the stator 10 with respect to the stator 10. As described with reference to FIGS. 5A and 5B, by rotating the bus ring 20 with respect to the stator 10 until the protrusion 501 is engaged with the second concave portion 513 via the guide portion 512, the conductive wires at both ends of the coil 120 can be easily guided to the position where the conductive wires are sandwiched between the terminals 212.

Subsequently, as illustrated in FIG. 6D, a crimping process is performed in which a load is applied to the terminal 212 to crimp the conductive wire of the coil 120 sandwiched between the U-shaped terminals 212 to the terminal 212. In the present embodiment, the crimping process is performed by a simultaneous dotting method so as to simultaneously crimp all the terminals 212.

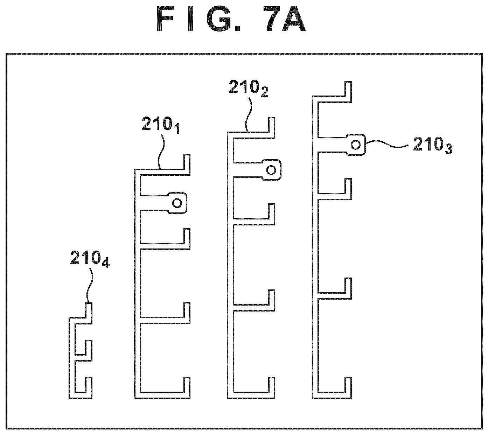

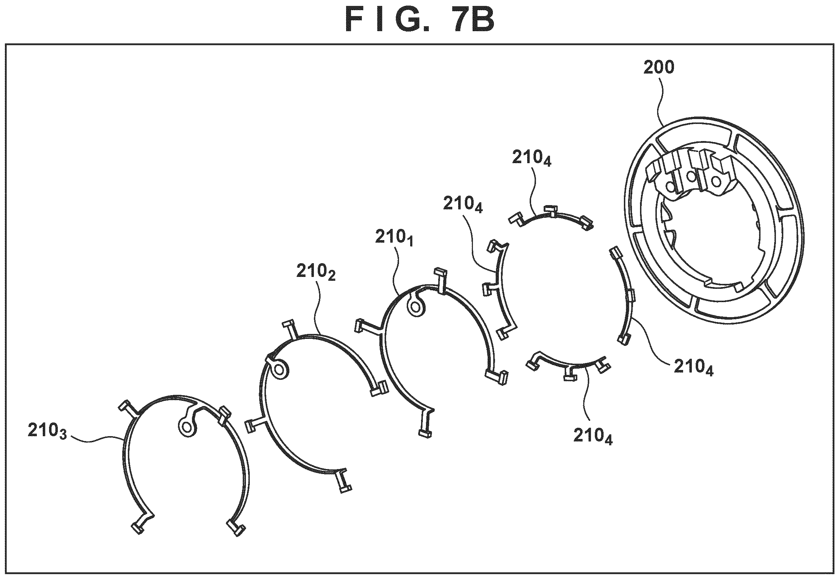

A manufacturing process of the bus ring 20 will be described with reference to FIGS. 7A and 7B.

As illustrated in FIG. 7A, the buses 210₁ to 210₄ of the bus ring 20 are manufactured by cutting out a planar metal plate, then circularly molding the cut part, forming a crossover portion that connects terminals fixed to the inner ring 202 of the bus ring 20, and molding each terminal 212 into a U shape.

Subsequently, as illustrated in FIG. 7B, bus ring 20 is manufactured by fitting manufactured buses 210₁ to 210₄ into resin insulating ring 200.

### <Modification>

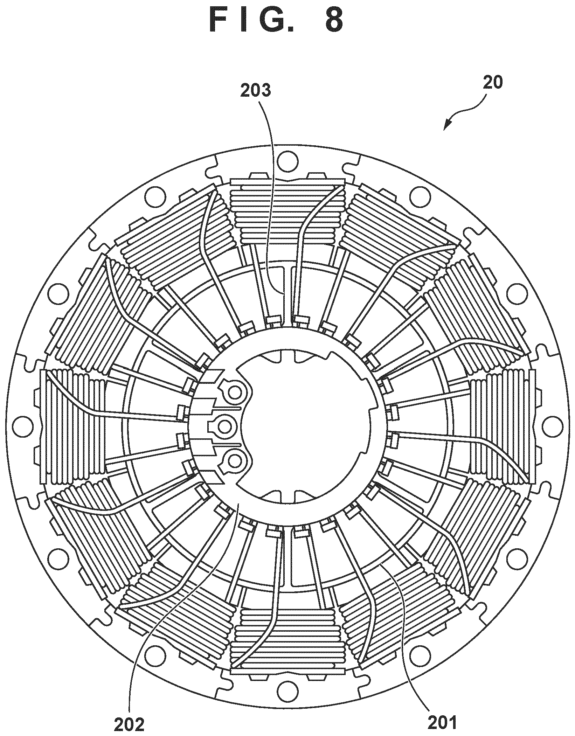

FIG. 8 illustrates a configuration of the stator 10 and the bus ring 20 applicable to a larger motor diameter. In FIG. 8, when the motor diameter becomes larger, the stator 10 can be designed such that the distance from the shaft 300 of the rotor 30 to the stator core block 100 in the radial direction of the stator 10 increases. Even in such a case, as illustrated in FIG. 8, by increasing the radius of the outer ring 201 of the bus ring 20 and increasing the length of the bridge 203 in the radial direction of the stator 10, the inner ring 202 can have the same configuration as that illustrated in FIG. 1. Therefore, the same buses 210₁ to 210₄ as that shown in FIG. 1 can be used for the bus ring 20, and only the insulating ring 200 of the bus ring 20 needs to be redesigned, so that the design cost of the bus ring 20 can be reduced.

As described above, according to the present embodiment, the bus ring 20 that performs wiring for collection and distribution is disposed on the inner peripheral side of the stator 10. According to the present embodiment, the bus ring 20 includes the outer ring 201, the inner ring 202, and the bridge 203 connecting the outer ring 201 and the inner ring 202, and the terminal 212 is provided on the inner ring 202. The bridge 203 also connects the outer ring 201 and the inner ring 202 such that a gap 204 is created between the outer ring 201 and the inner ring 202. As a result, the cost of the conductor for the wiring of the bus 210 and the use amount of the resin for forming the bus ring can be reduced.

According to the present embodiment, the magnet 320 of the rotor 30 is disposed such that at least a part thereof faces the gap 204. As a result, the cooling performance of the magnet 320 of the rotor 30 can be improved.

In addition, according to the present embodiment, the crossover portion of the bus ring 20 connecting the terminals of the buses 210₁ to 210₄ has a threequarter circle shape cut out in the radial direction and has a flat shape in the circumferential direction. As a result, the bus 210 can be formed by circularly molding the bus bar cut out or embossed from the planar metal plate, and the material cost at the time of manufacturing can be reduced.

According to the present embodiment, the rotating electric machine 1 is disposed in the vehicle such that the shaft 300 of the rotor 30 is horizontal to the road surface. In such a case, the terminal 212 of the rotating electric machine 1 is arranged closer to the shaft of the rotor 30, that is, at a position away from the road surface. Therefore, even when the vehicle enters a puddle or the like, the possibility that the terminal 212 is immersed in water can be further reduced, and the submersion resistance of the rotating electric machine 1 can be further improved.

### <Other Embodiment>

The invention is not limited to the foregoing embodiments, and various variations/changes are possible within the spirit of the invention.

For example, although the number of stator core blocks 100 is 12 in the present embodiment, a larger or smaller number of stator core blocks 100 may be used.

In the present embodiment, the terminal 212 protrudes outward in the radial direction from the inner ring 202, but may be disposed at a position overlapping the inner ring 202 in the axial direction.

### <Summary of Embodiments>

1. According to the above embodiments, a rotating electric machine (e.g. rotating electric machine 1) comprises:
   a rotor (e.g. rotor 30);
   an annular stator (e.g. stator 10) including a plurality of stator core blocks (e.g. stator core block 100) arranged to surround a magnet (e.g. magnet 320) of the rotor;
   a plurality of insulating members (e.g. insulating member 110) that respectively cover the plurality of stator core blocks;
   a plurality of coils (e.g. coil 120) wound around the plurality of stator core blocks via the plurality of insulating members, respectively; and
   a bus ring (e.g. bus ring 20) engaged with the plurality of insulating members;
   wherein the bus ring includes:
      an inner ring (e.g. inner ring 202) provided with a terminal portion (e.g. terminal 212) to which each conductive wire of the plurality of coils is connected;
      an outer ring (e.g. outer ring 201) disposed on an outward side in a radial direction of the inner ring and engaged with the plurality of insulating members; and
      a bridge portion (e.g. bridge 203) that connects the inner ring and the outer ring and forms a radial gap (e.g. gap 204) between the inner ring and the outer ring.
   This makes it possible to reduce the design cost when designing rotating electric machines having different motor diameters.
2. According to the above embodiments of the rotating electric machine, the terminal portion is disposed so as to protrude radially outward from the inner ring on the radially inward side of the outer ring.
   As a result, the thickness of the bus ring can be reduced, and the rotating electric machine can be downsized.
3. According to the above embodiments of the rotating electric machine, the bridge portion of the bus ring is disposed at a position not overlapping the terminal portion in an axial direction of the rotor.
   As a result, the thickness of the bus ring can be reduced, and the rotating electric machine can be downsized.
4. According to the above embodiments of the rotating electric machine, the outer ring has a protrusion engaged with the plurality of insulating members, and
   the protrusion is disposed at a position overlapping the bridge portion in a circumferential direction of the bus ring.
   As a result, it is possible to support a load applied to the protrusion 501 in the radial direction of the bus ring and to prevent breakage of the bus ring 20.
5. According to the above embodiments of the rotating electric machine, the magnet of the rotor is disposed at a position at least partially overlapping the gap in a rotation axis direction of the rotor.
   As a result, heat of the magnet 320 can be efficiently dissipated through the gap 204.
6. According to the above embodiments of the rotating electric machine, the terminal portion of the bus ring is disposed inside the magnet of the rotor in a radial direction of the bus ring.
   Accordingly, the heat dissipation of the magnet 320 can be prevented from being hindered by the terminal 212.
7. According to the above embodiments of a vehicle, the rotating electric machine according to the above embodiments is disposed such that a rotation axis direction of the rotor is substantially parallel to a road surface.
   This can improve submersion resistance of the vehicle.
8. According to the above embodiments of a bus ring of a rotating electric machine, the rotating electric machine includes:
   a rotor;
   an annular stator including a plurality of stator core blocks arranged to surround a magnet of the rotor;
   a plurality of insulating members that respectively cover the plurality of stator core blocks; and
   a plurality of coils wound around the plurality of stator core blocks via the plurality of insulating members, respectively,
   the bus ring characterized by comprising:
      an inner ring provided with a terminal to which each conductive wire of the plurality of coils is connected;
      an outer ring disposed on an outward side in a radial direction of the inner ring and engaged with the plurality of insulating members; and
      a bridge portion that connects the inner ring and the outer ring and forms a radial gap between the inner ring and the outer ring.

This can reduce the cost of designing the bus rings for stators having different diameters.

The present invention is not limited to the above embodiments and various changes and modifications can be made within the spirit and scope of the present invention. Therefore, to apprise the public of the scope of the present invention, the following claims are made.

## Claims

1. A rotating electric machine **characterized by** comprising:
a rotor;
an annular stator including a plurality of stator core blocks arranged to surround a magnet of the rotor;
a plurality of insulating members that respectively cover the plurality of stator core blocks;
a plurality of coils wound around the plurality of stator core blocks via the plurality of insulating members, respectively; and
a bus ring engaged with the plurality of insulating members;
wherein the bus ring includes:
an inner ring provided with a terminal portion to which each conductive wire of the plurality of coils is connected;
an outer ring disposed on an outward side in a radial direction of the inner ring and engaged with the plurality of insulating members; and
a bridge portion that connects the inner ring and the outer ring and forms a radial gap between the inner ring and the outer ring.

2. The rotating electric machine according to claim 1, **characterized in that** the terminal portion is disposed so as to protrude radially outward from the inner ring on the radially inward side of the outer ring.

3. The rotating electric machine according to claim 1, **characterized in that** the bridge portion of the bus ring is disposed at a position not overlapping the terminal portion in an axial direction of the rotor.

4. The rotating electric machine according to claim 1, **characterized in that**
the outer ring has a protrusion engaged with the plurality of insulating members, and
the protrusion is disposed at a position overlapping the bridge portion in a circumferential direction of the bus ring.

5. The rotating electric machine according to claim 1, **characterized in that** the magnet of the rotor is disposed at a position at least partially overlapping the gap in a rotation axis direction of the rotor.

6. The rotating electric machine according to claim 1, **characterized in that** the terminal portion of the bus ring is disposed inside the magnet of the rotor in a radial direction of the bus ring.

7. A vehicle, **characterized in that** the rotating electric machine according to claim 1 is disposed such that a rotation axis direction of the rotor is substantially parallel to a road surface.

8. A bus ring of a rotating electric machine, the rotating electric machine including:
a rotor;
an annular stator including a plurality of stator core blocks arranged to surround a magnet of the rotor;
a plurality of insulating members that respectively cover the plurality of stator core blocks; and
a plurality of coils wound around the plurality of stator core blocks via the plurality of insulating members, respectively,
the bus ring **characterized by** comprising:
an inner ring provided with a terminal to which each conductive wire of the plurality of coils is connected;
an outer ring disposed on an outward side in a radial direction of the inner ring and engaged with the plurality of insulating members; and
a bridge portion that connects the inner ring and the outer ring and forms a radial gap between the inner ring and the outer ring.
